# EUROPEAN PATENT SPECIFICATION

(11) **EP 2 803 869 B1**
(45) Date of publication and mention of the grant of the patent: **01.02.2017**
(21) Application number: 14166300.5
(22) Date of filing: 29.04.2014
(51) Int. Cl.: F16B 5/06, F16B 5/02, F16B 37/08

(54) **RETAINER FOR A STRIP-SHAPED PART**
HALTER FÜR EIN STREIFENFÖRMIGES TEIL
DISPOSITIF DE RETENUE POUR UNE PARTIE EN FORME DE BANDE

(30) Priority: 16.05.2013 DE 202013102152 U
(43) Date of publication of application: 19.11.2014
(73) Proprietor: Newfrey LLC, New Britain, CT 06053 (US)
(72) Inventor: Werner, Wolfgang, 35394 Gießen (DE); Lautner, Siegfried, 35394 Gießen (DE); Hahn, Ernst Ludwig, 35394 Gießen (DE)
(74) Representative: Haar, Lucas Heinz Jörn

(56) References cited:
- EP-A1- 1 961 590
- CA-A1- 2 670 331
- CH-A1- 701 598
- GB-A- 2 150 727
- US-A- 4 736 539

## Description

The invention relates to a retainer for attachment of a strip-shaped part, wherein the retainer has a body that contains a first receptacle for the strip-shaped part and a second receptacle for a fastener.

In the manufacture of motor vehicles, it is customary to affix to the vehicle body an electronically readable RFID label that is used in controlling the production process. The label takes the form of an elongated, essentially rectangular, thin-walled strip of material in which a transponder is located. In order to attach such a label to the vehicle body, it is known to fasten the label, which is equipped with a mounting hole, to a threaded stud using a nut. It is a disadvantage here that the label may twist or be destroyed by excessive tightening torques when the nut is tightened. It is also known to attach the label using a clip that is anchored in a hole in the sheet metal of the vehicle body. In the case of attachment at a hole, there is the problem that the position desired for attaching the label is not always available because a hole cannot be punched at the location intended for the label. Both prior art solutions also suffer from the disadvantage that the label may twist.

GB 2 150 727 A discloses a housing for retaining a number plate comprising a first part having mounting openings for receiving securing screws for mounting the housing to a vehicle part and peripheral elements with inwardly extending lips which overlie two opposite sides of the periphery of the number plate. Separate retaining parts which co-operate via press fit lugs with the first part to retain and overlap the remaining sides of the periphery of the number plate.

The object of the invention is to create a retainer of the aforementioned type that allows attachment of a strip-shaped part, such as an RFID label, to mounting studs to be produced simply. The attachment of the strip-shaped part established with the aid of the retainer should offer security from unintentional detachment and should ensure a predetermined orientation of the strip-shaped part. In addition, it should be possible to produce the retainer economically and to install it manually as well as automatically.

The said object is attained according to the invention by a retainer with the features specified in claim 1. Advantageous embodiments of the retainer are specified in the additional claims.

According to the invention, the retainer for attachment of a strip-shaped part has a body that has a first receptacle for the strip-shaped part and a second receptacle for a fastener, wherein the first receptacle is composed of a support surface, two guide ribs located at opposite edges of the support surface and raised with respect thereto, and at least one hold-down part located at a distance from the support surface, wherein a locking part that is movably attached to the body is located above the first receptacle, which locking part can be moved from an infeed position distant from the receptacle into a retention position in which the locking part overlaps a region of the first receptacle and can be held in place by a locking device and in which the strip-shaped part located in the first receptacle is fastened to the body by the locking part, and wherein the second receptacle has a mounting opening to receive a first stud and an orientation opening to receive a second stud.

With the retainer according to the invention, the strip-shaped part can be placed on a section of the bearing surface with one end between the guide ribs and, on the bearing surface and guided by the guide ribs, can then be pushed through beneath the hold-down part into a position intended for attachment, and then be securely connected to the retainer by moving the locking part into the retention position. This simple process is easy to carry out and avoids the risk of an excessively high load and damage to the strip-shaped part. The mounting opening of the retainer connected to the strip-shaped part can then placed on a first stud equipped with an external thread, grooves or ribs, thereby being attached to the stud. A second stud adjacent to the first stud engages the orientation opening of the retainer and thereby achieves an alignment of the retainer relative to the support part to which the studs are attached that is predetermined by the arrangement of the two studs and thus is unalterable. This fastening process is also easy to carry out and can be performed by hand or using an auxiliary tool, depending on the push-on resistance, which is a function of the predetermined retention force.

The attachment of the strip-shaped part to the retainer using the locking part can be accomplished by clamping or by positive locking. A preferably positive locking connection can be achieved according to the invention by the means that the locking part has, on the side facing the first receptacle, a projecting peg that engages a mounting hole in the strip-shaped part located in the first receptacle when the locking part is in the retention position.

The positioning of the strip-shaped part in the correct location for engagement of the peg can be achieved according to another proposal of the invention by means of a stop that delimits the first receptacle in the insertion direction for the strip-shaped part. It is advantageous in this design for the locking part to be attached on the stop preferably by using a flex hinge. Because of the locking part projecting from the stop, it is possible in this way to prevent the strip-shaped part from being able to slide over the stop during insertion into the first receptacle.

According to the invention, provision can additionally be made for the stop to have an asymmetrical shape with respect to the center axis of the first receptacle extending in the insertion direction for the strip-shaped part, so that the strip-shaped part, which likewise is asymmetrical at its stop end, can only be attached to the retainer in the position that matches the stop. This achieves the result that the strip-shaped part can only be connected to the retainer in a position determined by the shape of its stop end, in which the top, for example provided with an optically readable marking, is visible.

The locking device for securing the locking part in the retention position has advantageously a catch that is attached to a web that spans the first receptacle and that works together with a locking tab located at the free end of the locking part. The web additionally constitutes a hold-down part. The ends of the web preferably are attached to the guide ribs extending on both sides of the first receptacle. Moreover, elastic tabs serving as hold-down parts that are designed to press the strip-shaped part onto the bearing surface can be attached to the guide ribs. The elastic tabs can also be attached to a hold-down part spanning the first receptacle in the form of a web attached to the guide ribs.

According to another proposal of the invention, the body has an essentially rectangular frame in whose frame opening are arranged multiple flat wall sections that together form the support surface, which wall sections are separated from one another by spaces, wherein the at least one hold-down part, and also the locking part and the locking device, are positioned above a plane located a distance from the bearing surface over the spaces. This design of the retainer can be molded economically from thermoplastic material in the plastic injection molding method using a simple, two-part mold.

According to the invention, the second receptacle of the retainer can have sleeve-like sections located below the first receptacle that are attached by one end to the wall sections forming the bearing surface and that are connected to the frame by support walls. One sleeve-like section contains the mounting opening, and the other contains the orientation opening. In order to secure a stud inserted in the mounting opening, locking fingers that can latch in grooves or flutes in the lateral surface of the stud can be located in the mounting opening.

In order to compensate for spacing tolerances of the studs to which it should be possible to connect the retainer, according to the invention the orientation opening takes the form of an elongated hole whose longitudinal axis intersects the center axis of the mounting opening. Spacing differences between the studs for attachment of the retainer can thus be compensated for within an extent determined by the length of the elongated hole.

In order to ensure that the retainer does not rest on the part that it is supposed to be attached to, according to the invention the sleeve-like sections are provided with bump-like projections at their insertion ends. During installation, the bump-like projections of the retainer brace against flange sections, for example the welding flanges of the studs. As a result, the retainer remains at a distance from the surface of the part carrying the stud, so that coating and painting of the surface of the part is not impaired by the affixing of the retainer.

The invention is explained in detail below using an exemplary embodiment that is shown in the drawings, wherein:

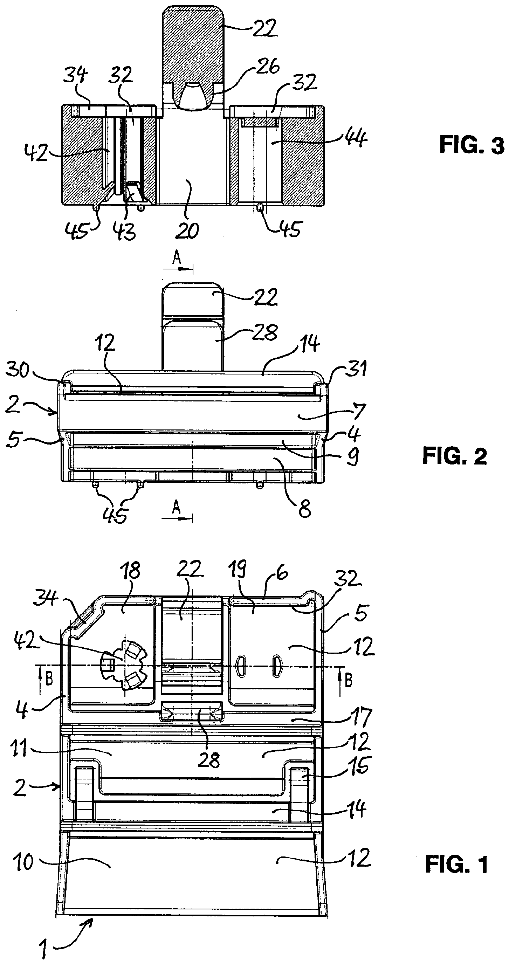

- Figure 1: is a top view of the top of a retainer according to the invention,
- Figure 2: is the retainer from Figure 1 in a view of the infeed side for the strip-shaped part,
- Figure 3: is a cross-section B - B of the retainer from Figure 1,
- Figure 4: is a cross-section A - A of the retainer from Figure 1 in the infeed position,
- Figure 5: is a cross-section A - A of the retainer from Figure 1 in the retention position,
- Figure 6: is a view of the underside of the retainer from Figure 1, and
- Figure 7: is a view of the retainer from above with an RFID label attached therein.

The retainer 1 shown in the drawings has a body 2 in the form of an essentially rectangular, box-like frame 3, which is composed of two parallel longitudinal walls 4, 5 and mutually parallel transverse walls 6, 7. Inside the frame 3, two additional transverse walls 8, 9 are located at a distance from one another and at a distance from the transverse walls 6, 7. On the bottom of the retainer 1, the transverse walls 6 - 9 terminate flush with the longitudinal walls 4, 5. On the top of the retainer 1, the transverse walls 7 - 9 terminate at wall sections 10, 11 perpendicular thereto which cross the frame opening between the longitudinal walls 4, 5. The tops of the wall sections 10, 11 lie in a common plane and form sections of a flat support surface 12, which extends at a distance from the top edges of the longitudinal walls 4, 5 and parallel thereto.

A free space 13 is located between the wall sections 10, 11. Located above the space 13 is a web 14 that connects the longitudinal walls 4, 5, and bears spring tabs 15 in the vicinity of the longitudinal walls 4, 5; these tabs extend towards the wall section 11. Located on the side of the wall section 11 facing away from the space 13 and connected to the transverse wall 8 is another free space 16, above which is located a web 17 that connects the longitudinal walls 4, 5. The undersides of the two webs 14, 17 facing the spaces 13, 16 are each located such a distance from the plane of the support surface 12 that a strip-shaped part on the support surface 12 can be pushed through beneath the webs 14, 17 and can be held down on the bearing surface by them.

Located in the two corners of the frame 3 formed by the transverse wall 6 and the longitudinal walls 4, 5 are two wall sections 18, 19, whose tops form additional sections of the support surface 12. The wall sections 18, 19 are rigidly connected to the transverse wall 6 and the longitudinal walls 4, 5, and are separated from one another by a space 20 and from the wall section 11 by the space 16. Located above the space 20 is a locking part 22, which is attached in a pivoting manner to the transverse wall 6 by a flex hinge 23. The locking part 22 is in the form of a rectangular plate that bears an angled locking tab 24 at its free end. On the outside, facing away from the space 20, the locking part 22 is additionally provided with a pushbutton 25 to facilitate actuation of the locking part 22. On the underside facing the space 20, the locking part 22 has a projecting peg 26, which is intended to engage an opening in the strip-shaped part to be attached.

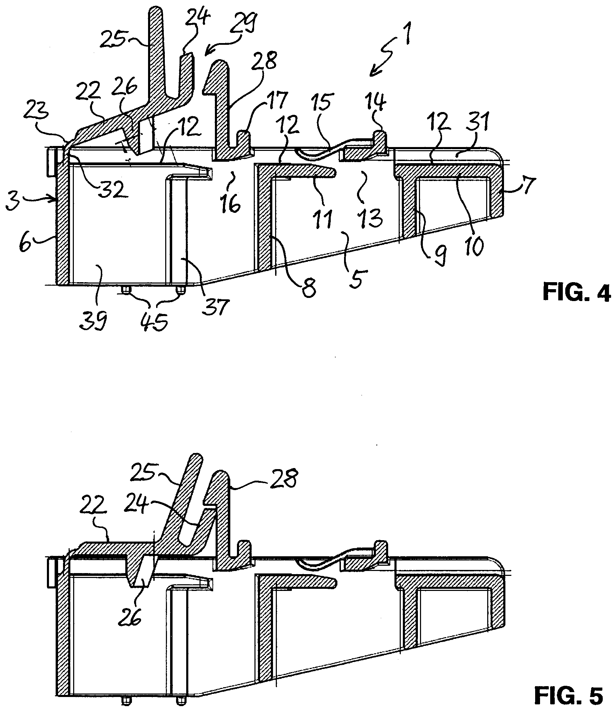

The locking part 22 can, as shown in Figure 5, be moved into a retention position in which it is held fast by a locking device 29 composed of the locking tab 24 and a catch 28. The catch 28 is mounted on the web 17 and projects from the web 17 on the side facing away from the space 16. At its free end, the catch 28 has a locking projection facing the locking part 22.

The top edge regions of the longitudinal walls 4, 5 project past the support surface 12 composed of the wall sections 10, 11, 18, 19, thus forming guide ribs 30, 31 for lateral guidance and support of the strip-shaped part to be attached to the retainer 1. In the region of the wall section 10, the guide ribs 30, 31 diverge away from the infeed direction in order to simplify feeding of the strip-shaped part. The transverse wall 6 and the mounting section of the flex hinge 23 likewise project past the support surface 12, and, in this way, together form a stop 32 for the forward end of the strip-shaped part in the infeed direction.

At the wall section 18, the corner formed by the transverse wall 6 and the longitudinal wall 4 is beveled by a transition piece 34 arranged at an angle of approximately 45°. At this corner, the upward projecting edge of the transition piece 34 forms a region of the stop 32 that consequently has an asymmetrical shape with respect to the longitudinal axis of the retainer 1 extending in the insertion direction.

The forward end face of the strip-shaped part can be provided with a shape corresponding to the asymmetrical contour of the stop 32 in order to thus define the mounting position of the strip-shaped part. If the strip-shaped part is introduced into the retainer 1 in the incorrect position, the sharp corner of its end intended for placement at the wall section 19 strikes the transition piece 34 and cannot then be pushed into the mounting position in which it can be attached by the locking part 22.

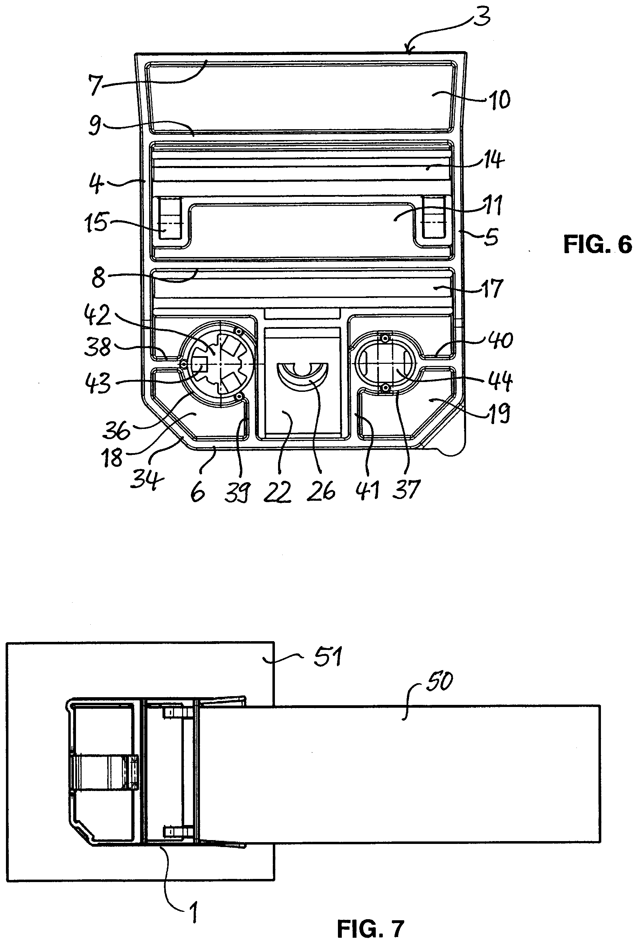

As shown in Figure 6, sleeve-like sections 36, 37, which extend at right angles to the wall sections 18, 19, are formed at the undersides of the wall sections 18, 19 facing away from the support surface 12. The sleeve-like section 36 has essentially the shape of a circular cylinder, and is connected to the transverse wall 6 and the longitudinal wall 4 by support walls 38, 39. The sleeve-like section 37 has essentially the shape of an oval cylinder, and is connected to the transverse wall 6 and the longitudinal wall 5 by support walls 40,41.

The bore of the sleeve-like section 36 is designed as a mounting opening 42 for receiving a threaded stud. It contains axially parallel guide ribs and locking fingers 43 that are located in the vicinity of the insertion end and approach the center of the opening in the insertion direction. The mounting opening 42 also passes through the wall section 18 so that a mold core can be introduced from there.

The bore of the sleeve-like section 37 forms an orientation opening 44 to receive a second stud. The orientation opening 44 is in the form of an elongated hole that is oriented such that the axis of the mounting opening 42 extending in the direction of the larger inside diameter intersects it.

The sleeve-like sections 36, 37 have bump-like projections 45 at their insertion ends, by which means the retainer can brace against flange sections of the stud. As a result, the retainer 1 remains at a distance from the surface of the support part to which the studs are welded.

For attachment of a strip-shaped part, for example an RFID label, to a support part provided with two studs arranged a suitable distance apart, for example the body of a motor vehicle, first the retainer 1 can be connected to the stud by being placed on the studs, and pressed onto the support part, in such a manner that one stud enters the mounting opening 42 and the other enters the orientation opening 44. The studs may be provided with a coarse thread in which the locking fingers 43 of the mounting opening 42 latch, thus securing the retainer 1 against a high pull-off force on the stud.

After attachment of the retainer 1, the strip-shaped part can be inserted with its insertion end forward into the first receptacle of the retainer 1. In doing so, it is necessary to make sure the beveled corner on the insertion end of the strip-shaped part is located on the side of the retainer on which the stop 32 of the retainer 1 has the beveled corner. During insertion, the strip-shaped part is guided by the bearing surface 12, the guide ribs 30, 31, and the hold-down parts that overlap them in the form of the webs 14, 17 and spring tabs 15. The locking part 22 is located in the infeed position, in which the peg 26 is spaced sufficiently far away from the plane of the support surface 12. When the insertion end of the strip-shaped part rests against the stop 32 in the correct position, a mounting hole present in the strip-shaped part is located below the peg 26. The locking part 22 can now be moved from the infeed position into the retention position by pressure on the pushbutton 25, during which process the locking tab 24 latches under the locking projection of the catch 28, thus securing the locking part 22 in the retention position. During this process, the peg 26 enters the opening in the strip-shaped part, causing the strip-shaped part to be attached to the retainer 1 in a positive locking manner. In this way, the strip-shaped part is attached securely and in an orientation defined by the position of the retainer 1 on the part intended for its mounting.

In Figure 7, the retainer 1 is shown with a strip-shaped RFID label 50 attached therein. The retainer 1 is placed on studs (not shown) of a support part 51.

## Claims

1. Retainer for attachment of a strip-shaped part having a body (2) that has a first receptacle for the strip-shaped part and a second receptacle for a fastener, wherein the first receptacle is composed of a support surface (12), two guide ribs (30, 31) located at opposite edges of the support surface (12) and raised with respect thereto, and at least one hold-down part located at a distance from the support surface (12), wherein a locking part (22) that is movably attached to the body (2) and that can be moved from an infeed position distant from the first receptacle into a retention position in which the locking part (22) overlaps a region of the first receptacle and can be held in place by a locking device (29) and in which the strip-shaped part located in the first receptacle is fastened to the body (2) by the locking part (22), and wherein the second receptacle has a mounting opening (42) to receive a first stud and an orientation opening (44) to receive a second stud, **characterized in that** the locking device (29) has an elastic catch (28) that is attached to a hold-down part that spans the first receptacle and that works together with a locking tab (24) located at the free end of the locking part (22).

2. Retainer according to claim 1, **characterized in that** the locking part (22) has, on the side facing the first receptacle, a projecting peg (26) that, when the locking part (22) is in the retention position, can engage an opening in the strip-shaped part located in the first receptacle.

3. Retainer according to one of claims 1 or 2, **characterized in that** the body (2) has a stop (32) that delimits the first receptacle in the insertion direction for the strip-shaped part.

4. Retainer according to claim 3, **characterized in that** the locking part (22) on the stop (32) is attached to the body (2) by a flex hinge (23).

5. Retainer according to one of claims 3 and 4, **characterized in that** the stop (32) has an asymmetrical shape with respect to the center axis of the first receptacle extending in the insertion direction for the strip-shaped part, so that the strip-shaped part, which likewise is asymmetrical at its stop end, can only be attached to the retainer (1) in one position.

6. Retainer according to one of the preceding claims, **characterized in that** elastic tabs (15) that are designed to press the strip-shaped part onto the bearing surface (12) are attached next to the guide ribs (30, 31).

7. Retainer according to one of the preceding claims, **characterized in that** the body (2) has an essentially rectangular frame (3) in whose frame opening are arranged multiple flat wall sections (10, 11, 18, 19) that together form the bearing surface (12), which wall sections are separated from one another by spaces (13, 16, 20), and **in that** the at least one hold-down part and the locking part (22) are positioned above a plane located a distance from the bearing surface (12) over the spaces.

8. Retainer according to one of the preceding claims, **characterized in that** the second receptacle is located below the first receptacle and has sleeve-like sections (36, 37) that form the mounting opening (42) and the orientation opening (44), and that are attached by one end to the wall sections (18, 19) forming the bearing surface, and are connected to the frame (3) by support walls (38, 39, 40, 41).

9. Retainer according to one of the preceding claims, **characterized in that** elastic locking fingers (43) are located in the mounting opening (42) of the second receptacle.

10. Retainer according to one of the preceding claims, **characterized in that** the orientation opening (44) takes the form of an elongated hole whose longitudinal axis intersects the center axis of the mounting opening (42).

11. Retainer according to one of claims 8 through 10, **characterized in that** the sleeve-like sections (36, 37) have bump-like projections (45) at the insertion end.

## Patentansprüche

1. Halter zur Befestigung eines streifenförmigen Teils mit einem Grundkörper (2), der eine erste Aufnahme für das streifenförmige Teil und eine zweite Aufnahme für ein Befestigungselement aufweist, wobei die erste Aufnahme von einer Auflagefläche (12), zwei an gegenüberliegenden Rädern der Auflagefläche (12) angeordneten, gegenüber dieser erhabenen Führungsrippen (30, 31) und wenigstens einem in einem Abstand zur Auflagefläche (12) angeordneten Niederhalteteil gebildet ist, wobei oberhalb der ersten Aufnahme ein bewegbar mit dem Grundkörper (2) verbundenes Riegelteil (22) angeordnet ist, das aus einer von der ersten Aufnahme entfernten Zuführstellung in eine Haltestellung bewegbar ist, in der das Riegelteil (22) einen Bereich der ersten Aufnahme übergreift und durch eine Sperreinrichtung (29) festhaltbar ist und in der das in der ersten Aufnahme angeordnete streifenförmige Teil durch das Riegelteil (22) an dem Grundkörper (2) befestigt ist, und wobei die zweite Aufnahme eine Befestigungsöffnung (42) zur Aufnahme eines ersten Bolzens und eine Orientierungsöffnung (44) zur Aufnahme eines zweiten Bolzens aufweist, **dadurch gekennzeichnet, dass** die Sperreinrichtung (29) einen federnden Sperrhaken (28) aufweist, der an einem die erste Aufnahme überspannenden Niederhelteteil befestigt ist und der mit einer am freien Ende des Riegelteils (22) angeordneten Sperrlasche (24) zusammenwirkt.

2. Halter nach Anspruch 1, **dadurch gekennzeichnet, dass** das Riegelteil (22) auf der der ersten Aufnahme zugekehrten Seite einen abstehenden Zapfen (26) aufweist, der in der Haltestellung des Riegelteils (22) in eine Öffnung in dem in der ersten Aufnahme angeordneten streifenförmigen Teil eingreifen kann.

3. Halter nach einem der Ansprüche 1 oder 2, **dadurch gekennzeichnet, dass** der Grundkörper (2) einen die erste Aufnahme in Einführrichtung für das streifenförmige Teil begrenzenden Anschlag (32) aufweist.

4. Halter nach Anspruch 3, **dadurch gekennzeichnet, dass** das Riegelteil (22) an dem Anschlag (32) durch ein Biegescharnier (23) mit dem Grundkörper (2) verbunden ist.

5. Halter nach einem der Ansprüche 3 oder 4, **dadurch gekennzeichnet, dass** der Anschlag (32) in Bezug auf die in der Einführrichtung für das streifenförmige Teil verlaufende Mittelachse der Aufnahme eine unsymmetrische Form hat so dass das an einem Anschlagende gleichermaßen unsymmetrisch ausgebildete streifenförmige Teil nur in einer Lage an dem Halter (1) befestigt werden kann.

6. Halter nach einem der vorhergehenden Ansprüche, **dadurch gekennzeichnet, dass** neben den Führungsrippen (30, 31) federnde Zungen (15) angebracht sind, die zum Andrücken des streifenförmigen Teils an die Anlagefläche (12) ausgebildet sind.

7. Halter nach einem der vorhergehenden Ansprüche, **dadurch gekennzeichnet, dass** der Grundkörper (2) einen im wesentlichen rechteckigen Rahmen (3) aufweist, in dessen Rahmenöffnung mehrere, gemeinsam die Anlagefläche (12) bildende ebene Wandabschnitte (10, 11, 18, 19) angeordnet sind, die durch Zwischenräume (13, 16, 20) voneinander getrennt sind, und dass oberhalb einer im Abstand von der Anlagefläche (12) angeardneten Ebene über den Zwischenräumen das wenigstens eine Niederhalteteil und das Riegelteil (22) angeordnet sind.

8. Halter nach einem der vorhergehenden Ansprüche, **dadurch gekennzeichnet, dass** die zweite Aufnahme unter der ersten Aufnahme angeordnet ist und hülsenförmige Abschnitte (36, 37) aufweist, welche die Befestigungsöffnung (42) und die Orientierungsöffnung (44) bilden und die mit einem Ende an die Anlagefläche bildenden Wandabschnitten (18, 19) befestigt und durch Stützwande (38, 39, 40, 41) mit dem Rahmen (3) verbunden sind.

9. Halter nach einem der vorhergehenden Ansprüche, **dadurch gekennzeichnet, dass** in der Befestigungsöffnung (42) der zweiten Aufnahme federnde Sperrfinger (43) angeordnet sind.

10. Halter nach einem der vorhergehenden Ansprüche, **dadurch gekennzeichnet, dass** die Orientierungsöffnung (44) die Form eines Langlochs hat, dessen Längsachse die Mittelachse der Befestigungsöffnung (42) schneidet.

11. Halter nach einem der Ansprüche 8 bis 10, **dadurch gekennzeichnet, dass** die hülsenartigen Abschnitte (36, 37) an dem Einsteckende noppenartige Vorsprünge (45) haben.

## Revendications

1. Dispositif de retenue pour l'attache d'une partie en forme de bande ayant un corps (2) qui comporte un premier socle pour la partie en forme de bande et un second socle pour un dispositif de fixation, dans lequel le premier socle est composé d'une surface de support (12), de deux nervures de guidage (30, 31) situées au niveau de bords opposés de la surface de support (12) et élevés par rapport à celles-ci, et d'au moins une partie d'immobilisation située à distance de la surface de support (12), dans lequel une partie de verrouillage (22) qui est attachée mobile au corps (2) et qui peut être déplacée d'une position d'alimentation distante du premier socle vers une position de retenue dans laquelle la partie de verrouillage (22) chevauche une région du premier socle et peut être tenue en place par un dispositif de verrouillage (29) et dans laquelle la partie en forme de bande située dans le premier socle est fixée au corps (2) par la partie de verrouillage (22), et dans lequel le second socle comporte une ouverture de montage (42) pour recevoir un premier goujon, et une ouverture d'orientation (44) pour recevoir un second goujon, **caractérisé en ce que** le dispositif de verrouillage (29) comporte un cliquet élastique (28) qui est attaché à une partie d'immobilisation qui couvre le premier socle et qui travaille de concert avec une languette de verrouillage (24) située à l'extrémité libre de la partie de verrouillage (22).

2. Dispositif de retenue selon la revendication 1, **caractérisé en ce que** la partie de verrouillage (22) comporte, sur le côté en regard du premier socle, une cheville en saillie (26) qui, lorsque la partie de verrouillage (22) est dans la position de retenue, peut engager une ouverture dans la partie en forme de bande située dans le premier socle.

3. Dispositif de retenue selon l'une des revendications 1 ou 2, **caractérisé en ce que** le corps (2) comporte une butée (32) qui délimite le premier socle dans la direction d'insertion pour la partie en forme de bande.

4. Dispositif de retenue selon la revendication 3, **caractérisé en ce que** la partie de verrouillage (22) sur la butée (32) est attachée au corps (2) par une articulation flexible (23).

5. Dispositif de retenue selon l'une des revendications 3 et 4, **caractérisé en ce que** la butée (32) a une forme asymétrique par rapport à l'axe central du premier socle s'étendant dans la direction d'insertion pour la partie en forme de bande, de sorte que la partie en forme de bande, qui est elle aussi asymétrique au niveau de son extrémité de butée, puisse uniquement être attachée au dispositif de retenue (1) dans une position.

6. Dispositif de retenue selon l'une des revendications précédentes, **caractérisé en ce que** des languettes élastiques (15) qui sont conçues pour presser la partie en forme de bande sur la surface d'appui (12) sont attachées à côté des nervures de guidage (30, 31).

7. Dispositif de retenue selon l'une des revendications précédentes, **caractérisé en ce que** le corps (2) comporte un cadre essentiellement rectangulaire (3), et dans l'ouverture de ce cadre, sont agencées de multiples sections à paroi plate (10, 11, 18, 19) qui ensemble forment la surface d'appui (12), lesquelles sections de paroi sont séparées les unes des autres par des espaces (13, 16, 20), et **en ce que** l'au moins une partie d'immobilisation et la partie de verrouillage (22) sont positionnées au-dessus d'un plan situé à distance de la surface d'appui (12) sur les espaces.

8. Dispositif de retenue selon l'une des revendications précédentes, **caractérisé en ce que** le second socle est situé en dessous du premier socle et comporte des sections de type manchon (36, 37) qui forment l'ouverture de montage (42) et l'ouverture d'orientation (44), et qui sont attachées par une extrémité aux sections de paroi (18, 19) formant la surface d'appui, et sont raccordées au cadre (3) par des parois de support (38, 39, 40, 41).

9. Dispositif de retenue selon l'une des revendications précédentes, **caractérisé en ce que** des doigts de verrouillage élastiques (43) sont situés dans l'ouverture de montage (42) du second socle.

10. Dispositif de retenue selon l'une des revendications précédentes, **caractérisé en ce que** l'ouverture d'orientation (44) prend la forme d'un trou allongé dont l'axe longitudinal coupe l'axe central de l'ouverture de montage (42).

11. Dispositif de retenue selon l'une des revendications 8 à 10, **caractérisé en ce que** les sections de type manchon (36, 37) comportent des saillies de type bossage (45) au niveau de l'extrémité d'insertion.
